# EUROPEAN PATENT APPLICATION

(11) **EP 4 753 246 A1**
(43) Date of publication of application: **03.06.2026**
(21) Application number: 25207130.3
(22) Date of filing: 07.10.2025
(51) Int. Cl.: H04N 1/00, H04N 1/387

(54) **IMAGE PROCESSOR, IMAGE READING DEVICE, IMAGE FORMING APPARATUS, INFORMATION ACQUISITION SYSTEM, IMAGE PROCESSING METHOD, AND CARRIER MEDIUM**

(30) Priority: 28.11.2024 JP 2024207802
(71) Applicant: ETRIA Co., Ltd., Yokohama, Kanagawa 220-0011 (JP)
(72) Inventor: YOKOYAMA, Takuhei, Kanagawa, 220-0011 (JP); MATSUTOH, Masanori, Kanagawa, 220-0011 (JP); OHMIYA, Yutaka, Kanagawa, 220-0011 (JP)
(74) Representative: SSM Sandmair

(57) **Abstract**

An image processor (340) includes a skew detection unit (341) configured to receive an image of an object and detect (S102) a skew of the object based on the image of the object. The object has a first width in a transverse direction and a length in a conveyance direction orthogonal to the transverse direction and is conveyed in the conveyance direction and guided by a guide having a second width in the transverse direction. The image processor (340) further includes a skew correction unit (342) configured to obtain a difference between the first width of the object and the second width of the guide in the transverse direction; and determine (S103) whether to correct the skew of the image based on the difference obtained.

## Description

### BACKGROUND

### Technical Field

The present disclosure relates to an image processor, an image reading device, an image forming apparatus, an information acquisition system, an image processing method, and a carrier medium.

### Related Art

An image reading device of related art that reads a conveyed document has a skew correction technique. The technique detects a skew of a document based on a read image and corrects the skew of the document. With such a technique, when the skew correction is unlikely to be normally performed, for example, when the shape of the leading end of the document is obliquely distorted, the user determines whether to perform the skew correction.

Japanese Unexamined Patent Application Publication No. 2019-134348 discloses that skew correction is performed when the sum of the guide width for conveyance of the document and the amount of increase in width due to the skew by the correctable maximum angle is greater than the detected width of the document, and skew correction is not performed when the sum is the detected width of the document or smaller.

With the technique of a comparative example, however, when there is distortion in the shape of the leading end of the document or a skew of a sensor that reads the document, skew correction is performed although there is no skew due to conveyance of the document. In such a case, since the end of the document parallel to the conveyance direction of the document is skewed by the skew correction, there is a problem that the distortion of the image is more noticeable than the distortion before the correction.

### SUMMARY

In view of the above, it is an objective to appropriately determine whether to perform skew correction and prevents distortion of an image due to skew correction.

According to one aspect of the present disclosure, an image processor includes an image processor includes a skew detection unit configured to receive an image of an object and detect a skew of the object based on the image of the object. The object has a first width in a transverse direction and a length in a conveyance direction orthogonal to the transverse direction and is conveyed in the conveyance direction and guided by a guide having a second width in the transverse direction. The image processor further includes a skew correction unit configured to obtain a difference between the first width of the object and the second width of the guide in the transverse direction; and determine whether to correct the skew of the image based on the difference obtained.

According to one aspect of the present disclosure, an image reading device including the image processor described above; a conveyor to convey the object in the conveyance direction; the guide to guide the object; and a reader to read the object and generates the image. The image processor outputs an output image based on the image read by the reader and the first width of the object.

According to one aspect of the present disclosure, an image forming apparatus includes the image reading device and an image to form an image on a medium based on an image read by the image reading device.

According to one aspect of the present disclosure, an information acquisition system including the image reading device and an information acquirer to acquire information on the object from the image.

According to one aspect of the present disclosure, an image processing method executed by an image processor includes receiving an image of an object. The object has a first width in a transverse direction and a length in a conveyance direction orthogonal to the transverse direction and is conveyed in the conveyance direction and guided by a guide having a second width in the transverse direction. The method further incudes detecting a skew of the object based on the image of the object; obtaining a difference between the first width of the object and the second width of the guide in the transverse direction; and determining whether to correct the skew of the image based on the difference obtained.

According to one aspect of the present disclosure incudes a carrier medium carrying computer-readable code for controlling a computer system to carry out a presuming method. The method includes receiving an image of an object. The object has a first width in a transverse direction and a length in a conveyance direction orthogonal to the transverse direction and is conveyed in the conveyance direction and guided by a guide having a second width in the transverse direction. The method further includes detecting a skew of the object based on the image of the object; obtaining a difference between the first width of the object and the second width of the guide in the transverse direction; and determining whether to correct the skew of the image based on the difference obtained.

According to the aspects of the present disclosure, it is possible to appropriately determine whether to perform skew correction and to prevent distortion of an image due to skew correction.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a side view illustrating an overview of an image reading device according to a first embodiment;
FIG. 2A, FIG. 2B, and FIG. 2C are diagrams illustrating a problem of skew correction according to a comparative example;
FIG. 3 is a block diagram illustrating an example of a configuration of the image reading device according to the first embodiment;
FIG. 4A and FIG. 4B are diagrams illustrating an example of an operation of a document width detection sensor;
FIG. 5 is a block diagram illustrating an example of a functional configuration of a processing unit according to the first embodiment;
FIG. 6A, FIG. 6B, and FIG. 6C are diagrams illustrating examples of a read image and an output image when a document has a skew;
FIG. 7A, FIG. 7B, and FIG. 7C are diagrams illustrating examples of the read image and the output image when the document does not have a skew;
FIG. 8A, FIG. 8B, and FIG. 8C are diagrams illustrating other examples of the read image and the output image when the document does not have a skew;
FIG. 9 is a flowchart presenting an example of a processing procedure according to the first embodiment;
FIG. 10 is a flowchart presenting another example of the processing procedure according to the first embodiment;
FIG. 11 is a side view illustrating an overview of an image reading device according to a second embodiment;
FIG. 12 is a side view illustrating an overview of an image reading device according to a third embodiment;
FIG. 13 is a diagram illustrating an example in which a document length detection sensor detects a size of a standard-sized document;
FIG. 14 is a block diagram illustrating an example of a configuration of the image reading device according to the third embodiment;
FIG. 15 is a block diagram illustrating an example of a functional configuration of a processing unit according to the third embodiment;
FIG. 16 is a flowchart presenting an example of a processing procedure according to the third embodiment;
FIG. 17 is a block diagram illustrating an example of a configuration of an image reading device according to a fourth embodiment;
FIG. 18 is a block diagram illustrating an example of a functional configuration of a processing unit according to the fourth embodiment;
FIG. 19 is a flowchart presenting an example of a processing procedure according to the fourth embodiment;
FIG. 20 is a block diagram illustrating an example of a configuration of an image reading device according to a fifth embodiment;
FIG. 21 is a block diagram illustrating an example of a functional configuration of a processing unit according to the fifth embodiment;
FIG. 22 is a flowchart presenting an example of a processing procedure according to the fifth embodiment;
FIG. 23 is a block diagram illustrating an example of a functional configuration of a processing unit according to a sixth embodiment;
FIG. 24 is a flowchart presenting an example of a processing procedure according to the sixth embodiment;
FIG. 25 is a cross-sectional view schematically illustrating an example of a configuration of a mechanical section of an image forming apparatus according to a seventh embodiment;
FIG. 26 is a diagram of an information acquisition system according to an eighth embodiment as viewed from a side surface;
FIG. 27 is a diagram of the information acquisition system according to the eighth embodiment as viewed from directly above; and
FIG. 28A and FIG. 28B are diagrams illustrating examples of a read image and an output image of an object.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

According to the aspects of the present disclosure, it is possible to appropriately determine whether to perform skew correction and to prevent distortion of an image due to skew correction.

Referring to the accompanying drawings, embodiments of an image processor, an image reading device, an image forming apparatus, an information acquisition system, an image processing method, and a program will be described in detail below.

### First Embodiment

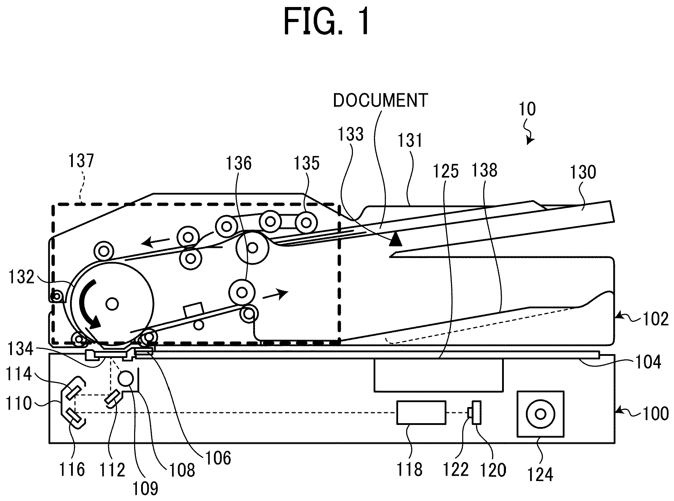

FIG. 1 is a side view illustrating an overview of an image reading device 10 according to a first embodiment. The image reading device 10 is, for example, a sheet-through image reading device, and includes a reading unit body 100 as a reader (flatbed scanner) and an automatic document feeder (ADF) 102.

The reading unit body 100 includes a contact glass 104, a reference white plate 106, a first carriage 108, a second carriage 110, a lens 118, a photodetector substrate 120, an image sensor 122 provided on the photodetector substrate 120, a scanner motor 124, and an operation panel 125. The first carriage 108 includes a light source 109 and a mirror 112. The second carriage 110 includes mirrors 114 and 116. The reading unit body 100 includes a reading window 134 through which a document conveyed by the ADF 102 is read. The reading unit body 100 is an example of a reading unit.

The ADF 102 is mounted on the upper portion of the reading unit body 100, and automatically feeds and conveys a document. The ADF 102 includes, for example, a document tray 130, a document guide 131, a conveyance drum 132, a document width detection sensor 133 or a width detector, a pickup roller 135, a sheet ejection roller 136, and a sheet ejection tray 138. A portion indicated by a broken line in FIG. 1 defines a conveyor 137.

The document guide 131 is located in the vicinity of the document tray 130 and guides both sides of a document.

The document is an example of an object. The document tray 130 is an example of an object tray. The document guide 131 is an example of an object guide.

The image reading device 10 including the image processor 340 described above; a conveyor 137 to convey the object in the conveyance direction; a guide (e.g., the document 131) to guide the object; and a reader (e.g., the reading unit body 100) to read the object and generates the image. The image processor 340 outputs an output image based on the image read by the reader and the first width of the object.

The document width detection sensor 133 detects the width (first size) of a document in a direction perpendicular to a conveyance direction (document conveyance direction) of the document placed on the document tray 130. The first size is, for example, the width of the document on a straight line perpendicular to the document conveyance direction. The pickup roller 135 picks up the document placed on the document tray 130. The ADF 102 conveys the document toward the conveyance drum 132 along the document guide 131. The conveyance drum 132 conveys the document toward the reading window 134. The document width detection sensor 133 is an example of a first sensor.

The image reading device 10 further includes an object tray (e.g., the document tray 130) on which the object is placed; and a first sensor (e.g., the document width detection sensor 133) located at the object tray, to detect the first width of the object.

The document is exposed to light from the light source 109 as the document passes over the reading window 134. The light source 109 is, for example, a light-emitting diode (LED) array. Reflected light reflected when light from the light source 109 illuminates an object, such as a document, forms an image on the image sensor 122 of the photodetector substrate 120 by the optical system including the mirrors 112, 114, and 116 and the lens 118 described above.

More specifically, the reflected light is turned back by the mirror 112 of the first carriage 108 and the mirrors 114 and 116 of the second carriage 110, passes through the lens 118, and forms a reduced image on the light receiving surface of the image sensor 122 on the photodetector substrate 120.

In flatbed reading, where a document is fixed on the contact glass 104 and scanned by the first carriage 108 and the second carriage 110, light from the light source 109 illuminates the document on the contact glass 104 from below the contact glass 104. The first carriage 108 and the second carriage 110 may be collectively referred to as the carriage. The reflected light from the document is turned back by the mirror 112 of the first carriage 108 and the mirrors 114 and 116 of the second carriage 110, passes through the lens 118, and forms a reduced image on the light receiving surface of the image sensor 122 on the photodetector substrate 120. During this process, the image reading device 10 scans the entire document by moving the first carriage 108 at a speed of V in a sub-scanning direction of the document, while moving the second carriage 110 in coordination with the first carriage 108 at a speed of 1/2V, which is half of the speed of V of the first carriage 108.

The image sensor 122 is, for example, a complementary metal oxide semiconductor (CMOS) linear image sensor. The image sensor 122 includes, for example, three color sensors (line image sensors) of a red (R) sensor, a green (G) sensor, and a blue (B) sensor. In this case, the image read by the image sensor 122 includes color data of RGB.

The operation panel 125 includes a touch panel that displays, for example, current set values of the image reading device 10 and receives, for example, an input of a set value or an instruction to start image reading from a user. The touch panel receives a touch input from the user. The user can perform operations such as inputting a numerical value into an input box, selecting an item from a pull-down menu, and turning on/off a check box displayed on the screen using, for example, a finger or a pen. The operation panel 125 may include input means such as a numeric keypad, a trackball, or a touch pad.

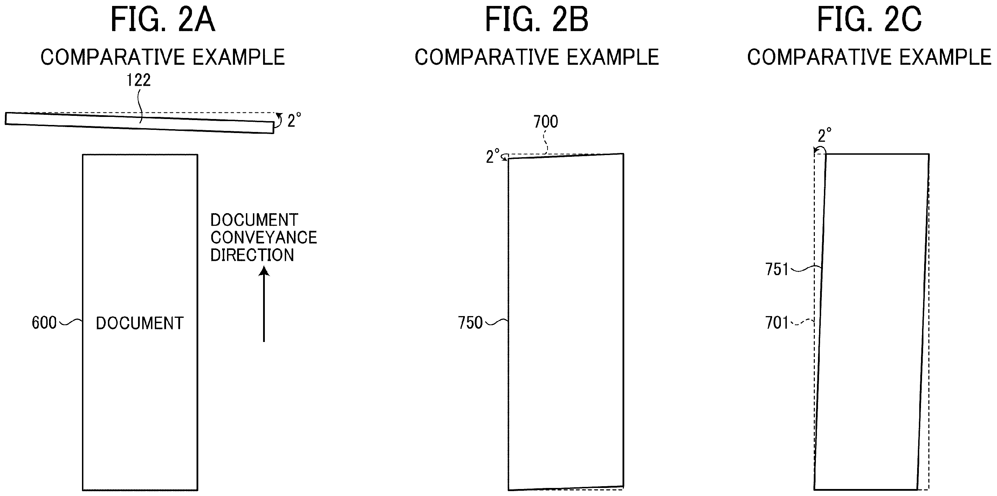

FIG. 2A, FIG. 2B, and FIG. 2C are diagrams illustrating a problem of skew correction according to a comparative example. FIG. 2A is a schematic diagram illustrating a positional relationship between a conveyed document 600 and the image sensor 122 as viewed from directly above. In FIG. 2A, a broken line indicates a direction perpendicular to the document conveyance direction (sub-scanning direction). The image sensor 122 is ideally located such that the longitudinal direction (main scanning direction) of the image sensor 122 is parallel to the broken line; however, the image sensor 122 is located in a skewed state (in this example, a state skewed by 2°) in FIG. 2A. Such a state may occur, for example, when the ADF 102 and the reading unit body 100 included in the image reading device 10 are slightly shifted from each other.

FIG. 2B illustrates an image (read image 700) obtained by reading the document in the state in FIG. 2A. As illustrated in FIG. 2B, the upper end and the lower end of an image (document image 750) of the document included in the read image 700 are skewed with respect to the upper end and the lower end of the read image 700.

FIG. 2C illustrates an output image 701 in which the skew of the document image 750 in FIG. 2B has been corrected. As illustrated in FIG. 2C, the skew of the upper end and the lower end of an image (document image 751) of the document included in the output image 701 are corrected, and the upper end and the lower end of the document image 751 are parallel to the upper end and the lower end of the output image 701. In contrast, the right end and the left end of the document image 751 are skewed with respect to the right end and the left end of the output image 701. Thus, the output image 701 is an image in which distortion due to the skew is more noticeable than the distortion before the correction as a whole. In the present embodiment, in order to reduce such distortion, whether to perform skew correction is appropriately determined as described below.

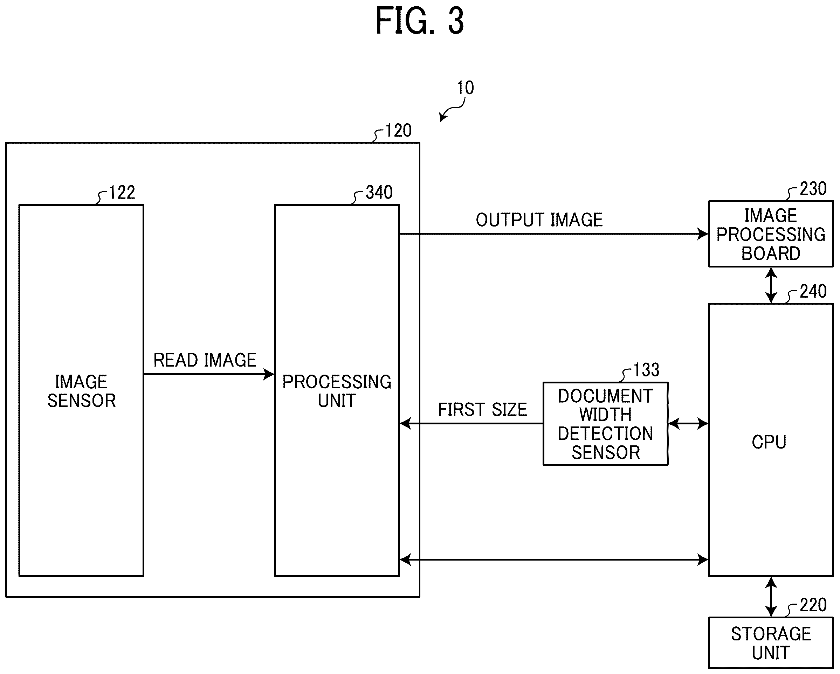

The following describes in detail an example of a configuration of the image reading device 10 according to the present embodiment. FIG. 3 is a block diagram illustrating the example of the configuration of the image reading device 10 according to the first embodiment. The image reading device 10 includes the photodetector substrate 120, the document width detection sensor 133, a storage unit 220, an image processing board 230, and a central processing unit (CPU) 240.

The photodetector substrate 120 photoelectrically converts reflected light forming an image, processes obtained image data as described below, and outputs the image data as an output image. The storage unit 220 is implemented by a hard disk drive (HDD), or a memory, and stores various kinds of data.

The image processing board 230 performs various kinds of image processing on the output image.

The CPU 240 controls the components of the image reading device 10.

The photodetector substrate 120 includes the image sensor 122 and a processing unit 340. As described above, the image sensor 122 reads an image reduced and formed on the light receiving surface to generate a read image.

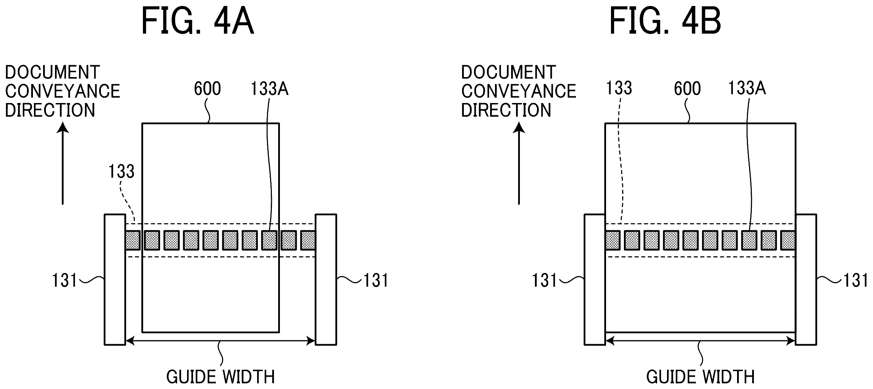

The document width detection sensor 133 detects a first size of a document. FIG. 4A and FIG. 4B are diagrams illustrating an example of an operation of the document width detection sensor 133.

As illustrated in FIGS. 4A and 4B, the document width detection sensor 133 is a sensor array including multiple detection sensors 133A, and is ideally located so as to have the longitudinal direction perpendicular to the document conveyance direction. Each of the detection sensors 133A is, for example, a reflective optical sensor that detects a document set on the document tray 130. While the number of detection sensors 133A is ten in FIGS. 4A and 4B, the number of detection sensors 133A may be other than ten. The document width detection sensor 133 may include, for example, a number of detection sensors 133A, the number of which is used to obtain detection resolution for a first size in accordance with the size of the document.

FIG. 4A illustrates an example of a case where the first size of the document 600 is smaller than the length (guide width) of the document guide 131 in the direction perpendicular to the document conveyance direction. In this case, some of the multiple detection sensors 133A do not react, and the document width detection sensor 133 detects that the value of the first size is a value smaller than the guide width. The guide width is an example of a width of the object guide.

FIG. 4B illustrates an example of a case where the first size of the document 600 is substantially equal to the length (guide width) of the document guide 131 in the direction perpendicular to the document conveyance direction. In this case, all the detection sensors 133A react, and the document width detection sensor 133 detects that the value of the first size is a value equal to the guide width.

The processing unit 340 generates an output image using the read image obtained by reading the document with the image sensor 122 and the first size. The processing unit 340 is an example of an image processor that processes an image. The image reading device 10 according to the present embodiment includes the conveyor 137, the document guide 131, the reading unit body 100, and the image processor (processing unit 340).

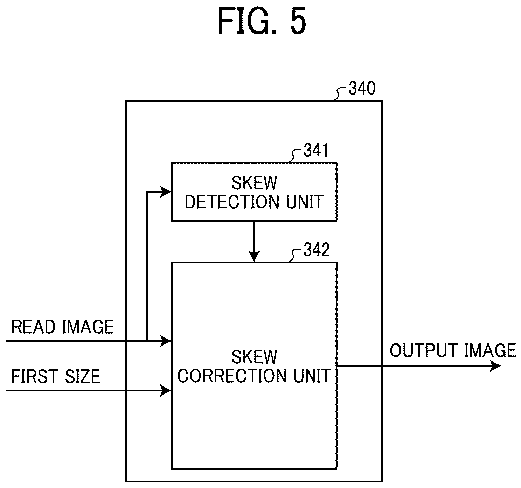

FIG. 5 is a block diagram illustrating an example of a functional configuration of the processing unit 340 according to the first embodiment. As illustrated in FIG. 5, the processing unit 340 includes a skew detection unit 341 and a skew correction unit 342.

The skew detection unit 341 detects a skew of the document based on the read image. For example, the skew detection unit 341 detects a boundary between the document and the background in the read image, and detects a skew of an approximate straight line of the upper end of the document estimated by, for example, the least squares method or Hough transform from the detected boundary.

The skew correction unit 342 corrects the read image based on the detected skew of the document. The skew correction unit 342 performs skew correction when the difference obtained by subtracting the first size from the guide width is greater than a predetermined threshold value T1, and does not perform skew correction when the difference is not greater than the threshold value T1. The threshold value T1 is a value of 0 or more, and is, for example, a value set in advance in a production plant through an experiment. For example, one threshold value T1 may be set regardless of the size of a document, or different values may be set for different sizes of documents. The threshold value T1 may be dynamically changed in accordance with, for example, the use state of the image reading device 10. The threshold value T1 is an example of a first threshold value.

The value of the guide width is stored in, for example, the storage unit 220. In this case, the processing unit 340 reads the value of the guide width from the storage unit 220 and inputs the value of the guide width to the skew correction unit 342. The value of the guide width may be a value obtained by adding a margin to a fixed value determined in product design in consideration of variations in components. When the document guide 131 includes a movable mechanism, guide width detection means may be provided, and the value of the guide width may be obtained from the detection result of the guide width detection means.

When the skew correction unit 342 determines to perform skew correction, for example, the skew correction unit 342 obtains a transformation (e.g., affine transformation) such that the approximate straight line of the upper end of the document is parallel to the upper end of the read image, and transforms the read image to generate a corrected image.

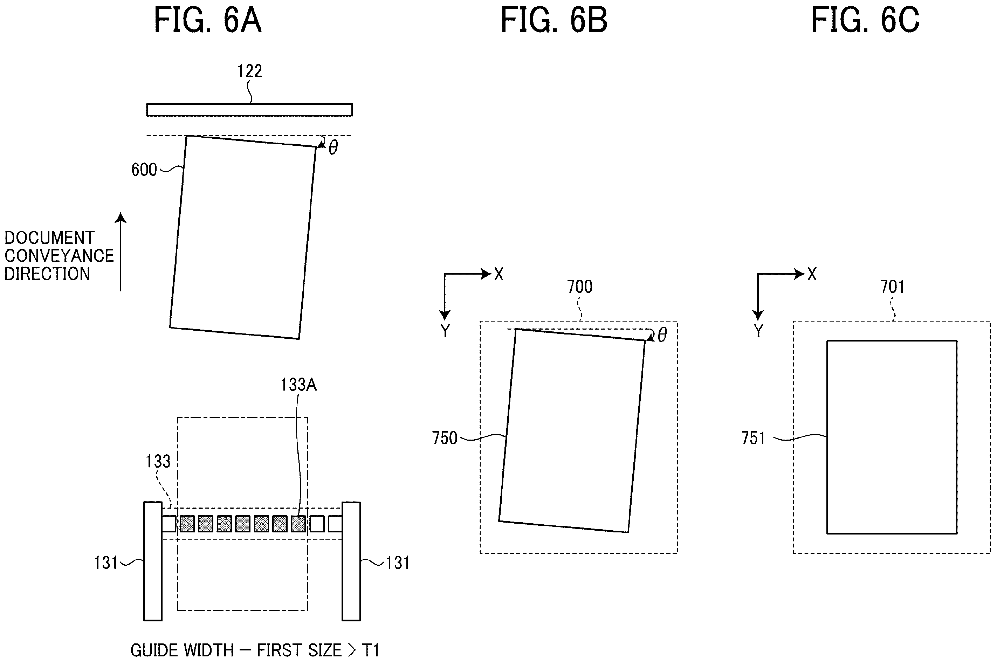

An operation of the skew correction unit 342 according to the present embodiment will be described with reference to FIGS. 6A to 8C. FIG. 6A, FIG. 6B, and FIG. 6C are diagrams illustrating examples of a read image 700 and an output image 701 when the document 600 has a skew. In FIG. 6A, the difference obtained by subtracting the first size of the document 600 from the guide width of the document guide 131 is greater than the threshold value T1, and the document 600 is read while being skewed by an angle of θ during conveyance. In this case, as illustrated in FIG. 6B, the upper end of a document image 750 in the read image 700 is skewed by the angle of θ with respect to the direction (X direction) of the upper end of the read image 700.

In this example, since the difference obtained by subtracting the first size from the guide width is greater than the threshold value T1, the skew correction unit 342 performs skew correction on the read image 700 to generate an output image 701. As illustrated in FIG. 6C, the skew correction unit 342 performs correction such that the upper end of a document image 751 in the output image 701 is parallel to the direction (X direction) of the upper end of the output image 701.

The skew correction unit 342 can determine whether to perform skew correction using the number of detection sensors 133A that have detected the document (the number of detection sensors 133A that have reacted) or the number of detection sensors 133A that have not reacted. For example, in a case where the number of detection sensors 133A is ten and the number of detection sensors 133A corresponding to the threshold value T1 is two, the skew correction unit 342 determines to perform skew correction when the number of detection sensors 133A that have reacted is seven or less (or when the number of detection sensors 133A that have not reacted is three or more).

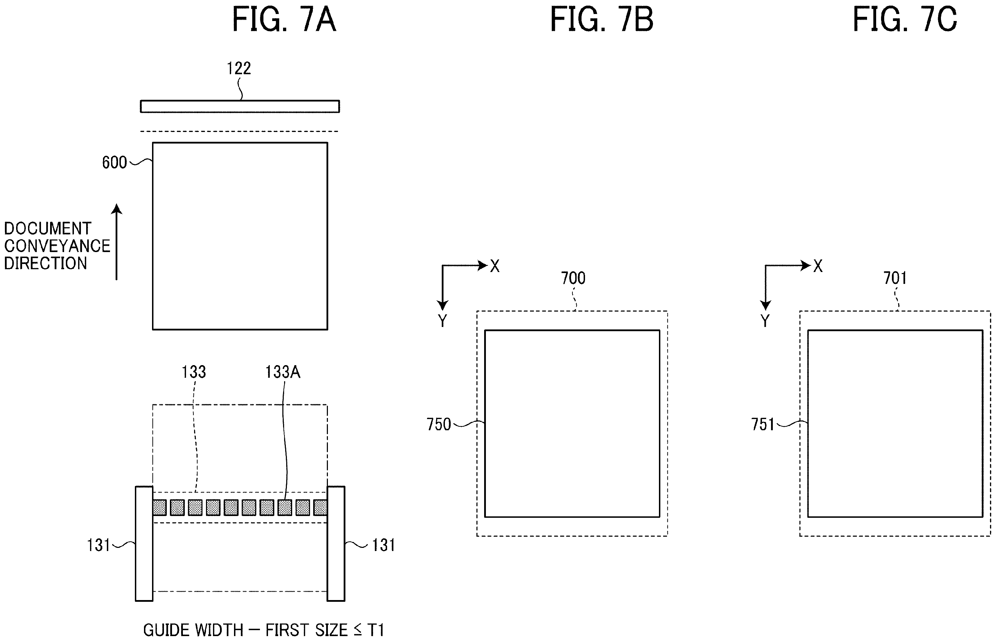

FIG. 7A, FIG. 7B, and FIG. 7C are diagrams illustrating examples of the read image and the output image when the document does not have a skew. In FIG. 7A, the difference obtained by subtracting the first size from the guide width is not greater than the threshold value T1, and the document 600 is read without being skewed during conveyance. In this case, as illustrated in FIG. 7B, the upper end of the document image 750 in the read image 700 is parallel to the X direction.

In this example, since the difference obtained by subtracting the first size from the guide width is not greater than the threshold value T1, the skew correction unit 342 does not perform skew correction on the read image 700. Thus, as illustrated in FIG. 7C, the skew correction unit 342 outputs the same image as the read image 700, as the output image 701.

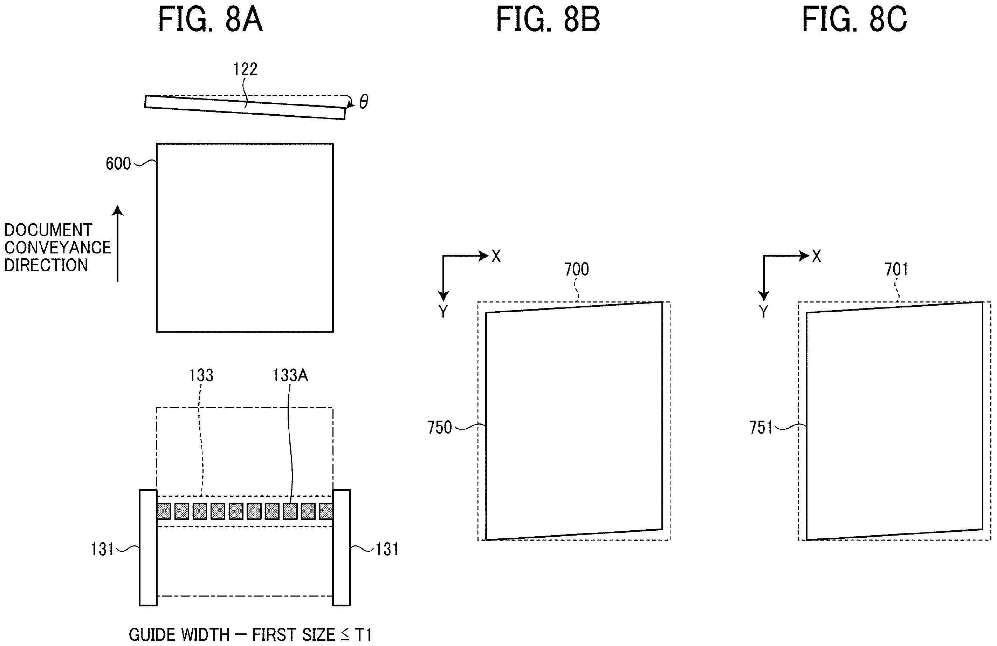

FIG. 8A, FIG. 8B, and FIG. 8C are diagrams illustrating other examples of the read image and the output image when the document does not have a skew. In FIG. 8A, the difference obtained by subtracting the first size from the guide width is not greater than the threshold value T1, and the document 600 is read without being skewed during conveyance. However, since the longitudinal direction of the image sensor 122 is not perpendicular to but slightly skewed with respect to the document conveyance direction, as illustrated in FIG. 8B, the upper end of the document image 750 in the read image 700 is skewed with respect to the X direction.

In this example, since the difference obtained by subtracting the first size from the guide width is not greater than the threshold value T1, the skew correction unit 342 does not perform skew correction on the read image 700. Thus, as illustrated in FIG. 8C, the skew correction unit 342 outputs the same image as the read image 700, as the output image 701. With this configuration, the above-described output image after skew correction according to a comparative example (an image with noticeable distortion such as the output image 701 in FIG. 2C) is not generated, and distortion of an image due to skew correction can be prevented.

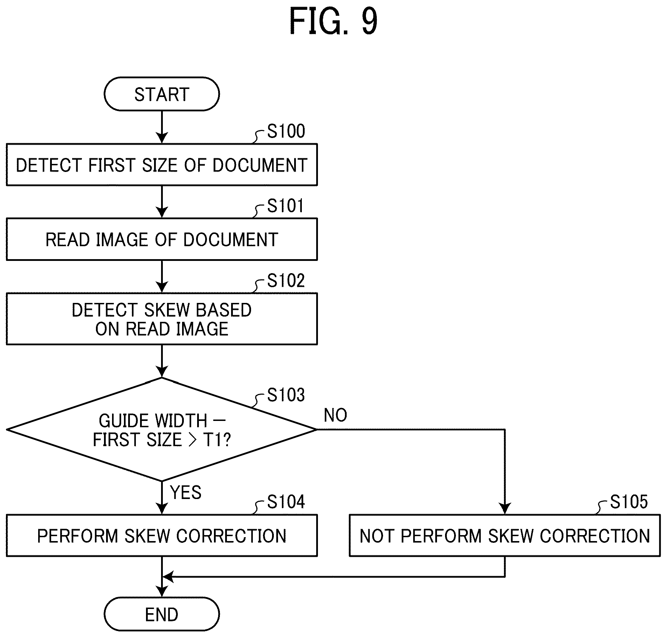

FIG. 9 is a flowchart of a processing procedure according to the first embodiment. The document width detection sensor 133 detects a first size of a document (step S100).

The image sensor 122 reads an image of the conveyed document (step S101). The skew detection unit 341 detects a skew based on the read image (step S102).

When the difference obtained by subtracting the first size from the guide width is greater than the threshold value T1 (step S103: Yes), the skew correction unit 342 performs skew correction (step S104). In contrast, when the difference obtained by subtracting the first size from the guide width is not greater than the threshold value T1 (step S103: No), the skew correction unit 342 does not perform skew correction (step S105).

In one example, the skew correction unit 342 may determine whether to perform skew correction further based on the length (second size) of the document in a direction parallel to the document conveyance direction. The second size is, for example, the length of the document on a straight line parallel to the document conveyance direction. For example, when the first size of the document is greater than the second size of the document in FIG. 2A, FIG. 2B, and FIG. 2C, the skew of the right end and the left end of the document image 751 due to skew correction is not so noticeable, and hence skew correction may be performed.

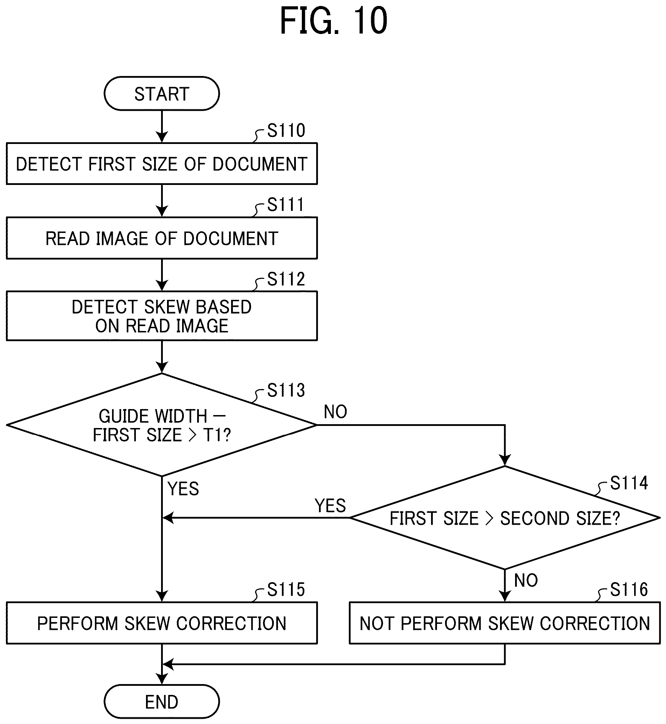

FIG. 10 is a flowchart illustrating another example of the processing procedure according to the first embodiment.

The difference from FIG. 9 is that FIG. 10 further includes step S114. Processes of steps S110 to S112, S115, and S116 in FIG. 10 are the same as those of steps S100 to S102, S104, and S105 in FIG. 9, and the description thereof will be omitted.

When the difference obtained by subtracting the first size from the guide width is greater than the threshold value T1 (step S113: Yes), the skew correction unit 342 performs skew correction (step S115). In contrast, when the difference obtained by subtracting the first size from the guide width is not greater than the threshold value T1 (step S113: No), the processing proceeds to step S114.

When the first size is greater than the second size in step S114 (step S114: Yes), the skew correction unit 342 performs skew correction (step S115). In contrast, when the first size is not greater than the second size (step S114: No), the skew correction unit 342 does not perform skew correction (step S116).

The skew correction unit 342 is configured to determine whether the difference is greater than a first threshold value; correct (S104) the skew of the image when the difference is greater than the first threshold value; and not correct the skew of the image when the difference is not greater than the first threshold value (T1).

The skew correction unit 342 is further configured to: determine (S113) whether the difference is greater than a first threshold value; correct the skew of the image when the difference is greater than the first threshold value (S113: YES); determine (S114) whether the first width is greater than the length of the object when the difference is not greater than the first threshold value (S113: NO); correct (S115) the skew of the image when the first width is greater than the length of the object (S114: YES); and not correct (S116) the skew of the image when the first width is not greater than the length of the object (S114: NO).

An image processing method executed by an image processor 340, includes receiving an image of an object. The object has a first width in a transverse direction and a length in a conveyance direction orthogonal to the transverse direction and is conveyed in the conveyance direction and guided by a guide having a second width in the transverse direction. The method further incudes detecting (S102) a skew of the object based on the image of the object; obtaining a difference between the first width of the object and the second width of the guide in the transverse direction; and determining (S103) whether to correct the skew of the image based on the difference obtained.

A carrier medium carrying computer-readable code for controlling a computer system to carry out a presuming method. The method includes receiving an image of an object. The object has a first width in a transverse direction and a length in a conveyance direction orthogonal to the transverse direction and is conveyed in the conveyance direction and guided by a guide having a second width in the transverse direction. The method further includes detecting (S102) a skew of the object based on the image of the object; obtaining a difference between the first width of the object and the second width of the guide in the transverse direction; and determining (S103) whether to correct the skew of the image based on the difference obtained.

As described above, with the present embodiment, whether to perform skew correction can be appropriately determined based on the first size and the guide width, and distortion of an image due to skew correction can be prevented.

While the processing unit 340 is provided on the photodetector substrate 120 in the above description, the processing unit 340 may be provided outside the photodetector substrate 120. For example, the processing unit 340 may be mounted on the image processing board 230. The circuit scale of the image processing board 230 is typically greater than the circuit scale of the photodetector substrate 120, and is designed with sufficient margin. Accordingly, the processing unit 340 can be mounted without increasing the circuit scale of the image processing board 230.

### Second Embodiment

In a second embodiment, an image reading device 10 includes the document width detection sensor 133 not in the vicinity of the document tray 130 but between a position (conveyance start position) at which the conveyor 137 starts conveyance of an object and a position (reading position) at which the image sensor 122 reads the object. In the following description of the second embodiment, the description of portions that are the same as those in the first embodiment is omitted, and the differences from the first embodiment are described.

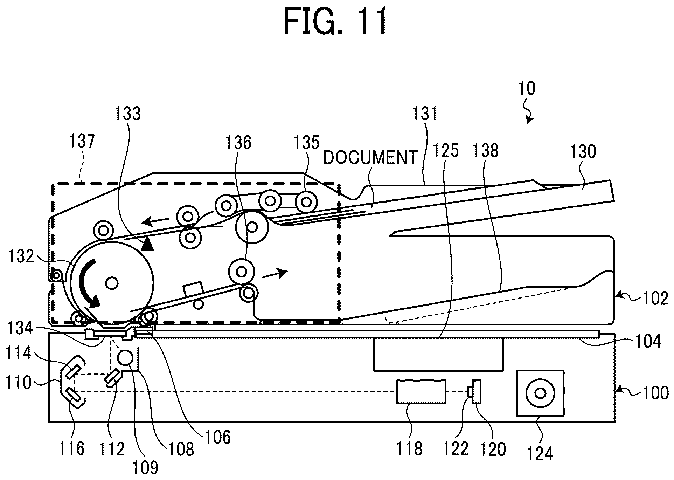

FIG. 11 is a side view illustrating an overview of the image reading device 10 according to the second embodiment. The difference from FIG. 1 is that the document width detection sensor 133 is located at the position between the conveyance start position and the reading position.

When the document width detection sensor 133 in the vicinity of the document tray 130 detects first sizes of multiple documents with different widths placed on the document tray 130, it is difficult to detect the first size of each document. In contrast, with the configuration in which the document width detection sensor 133 is provided between the conveyance start position and the reading position in the present embodiment, the document width detection sensor 133 located in the middle of the conveyance path detects the first sizes of the documents conveyed one by one.

As described above, with the present embodiment, even when the multiple documents are placed on the document tray 130, the document width detection sensor 133 can detect the first sizes of the documents conveyed one by one. Further, whether to perform skew correction is appropriately determined based on the detected first size and the guide width, and distortion of an image due to skew correction can be prevented.

An image processor 340 includes a skew detection unit 341 configured to receive an image of an object and detect (S102) a skew of the object based on the image of the object. The object has a first width in a transverse direction and a length in a conveyance direction orthogonal to the transverse direction and is conveyed in the conveyance direction and guided by a guide having a second width in the transverse direction. The image processor 340 further includes a skew correction unit 342 configured to obtain a difference between the first width of the object and the second width of the guide in the transverse direction; and determine (S103) whether to correct the skew of the image based on the difference obtained.

The image reading device 10 further includes a first sensor (e.g., the document width detection sensor 133) between a first position at which the conveyor 137 starts conveying the object and a second position at which the reader (e.g., reading unit body 100) reads the object, the first sensor (e.g., the document width detection sensor 133) to detect the first width of the object.

### Third Embodiment

In a third embodiment, a second size of a document having a standard size (standard-sized document) is detected, and a first size of the standard-sized document is obtained based on the detected second size. In the following description of the third embodiment, the description of portions that are the same as those in the first embodiment is omitted, and the differences from the first embodiment are described.

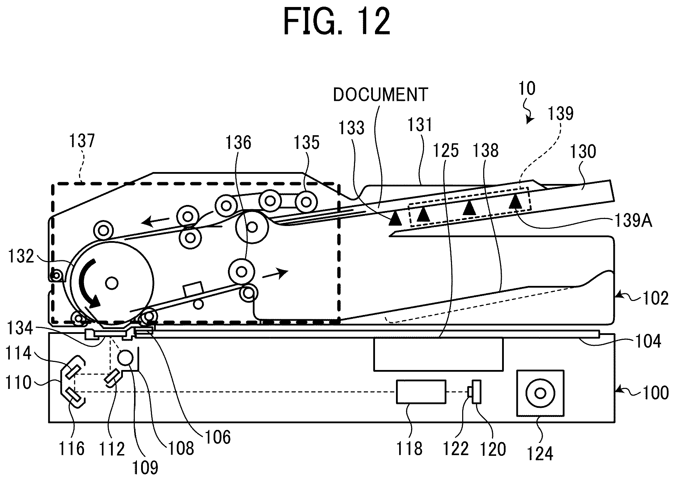

FIG. 12 is a side view illustrating an overview of an image reading device 10 according to the third embodiment. The difference from FIG. 1 is that a document length detection sensor 139 is added to the document tray 130. The document length detection sensor 139 is an example of a second sensor.

The document length detection sensor 139 detects a second size of a standard-sized document placed on the document tray 130. As illustrated in FIG. 12, the document length detection sensor 139 includes multiple detection sensors 139A. Each of the detection sensors 139A is, for example, a reflective optical sensor that detects a document set on the document tray 130. While the number of detection sensors 139A is three in FIG. 12, the number of detection sensors 139A may be a number other than three. The document length detection sensor 139 can include, for example, the number of detection sensors 139A to be used depending on the type of standard-sized document.

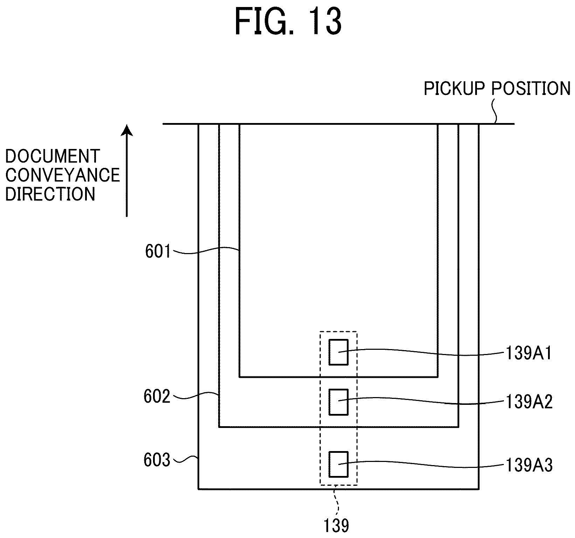

FIG. 13 is a diagram illustrating an example in which the document length detection sensor 139 detects the size of a standard-sized document.

As illustrated in FIG. 13, multiple detection sensors 139A1 to 139A3 are discretely arranged near intermediate positions between respective two adjacent second sizes so that second sizes of different standard-sized documents can be distinguished from one another.

When the upper end of the document 600 is brought into contact with the pickup position, the lower end of the document 600 is located at a position at a distance of 297 mm from the pickup position in a case of, for example, an A4-size vertically placed sheet. The orientation of the document (whether the direction in which the document is placed is vertical or horizontal) is vertical when the document is placed with the long side thereof parallel to the document conveyance direction, and horizontal when the document is placed with the short side thereof parallel to the document conveyance direction.

Similarly, the lower end of the document is located at a position at a distance of 257 mm from the pickup position in a case of a B5-size vertically placed sheet, and the lower end of the document is located at a position at a distance of 210 mm from the pickup position in a case of an A5-size vertically placed sheet, as viewed in the drawing. The lower end of the document refers to the upstream end of the document in the conveyance direction. In this case, the detection sensors 139A are located at positions (in the vicinities of the positions at distances of 277 mm and 233.5 mm from the pickup position) corresponding to the intermediate positions between the lower ends of the respective sizes.

In FIG. 13, the document length detection sensor 139 detects a second size of a standard-sized document 601 when just the detection sensor 139A1 reacts, and detects a second size of a standard-sized document 602 when just the detection sensor 139A3 does not react. Similarly, the document length detection sensor 139 detects a second size of a standard-sized document 603 when all of the detection sensors 139A1 to 139A3 react.

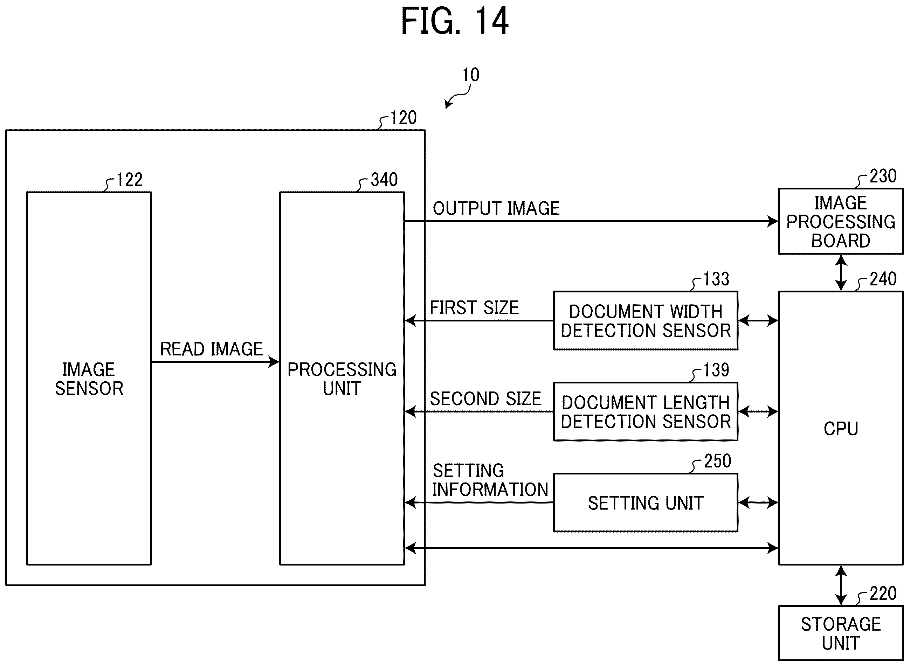

FIG. 14 is a block diagram illustrating an example of a configuration of the image reading device 10 according to the third embodiment. The difference from FIG. 3 is that the image reading device 10 further includes the document length detection sensor 139 and a setting unit 250.

The document length detection sensor 139 detects a second size of a standard-sized document and inputs the detected second size to the processing unit 340.

The setting unit 250 sets information on, for example, the orientation of a document and whether the document has a standard size in accordance with an operation performed on the operation panel 125 by the user, and inputs setting information including the set orientation to the processing unit 340. Alternatively, the setting unit 250 may set the orientation of the document using a physical sensor.

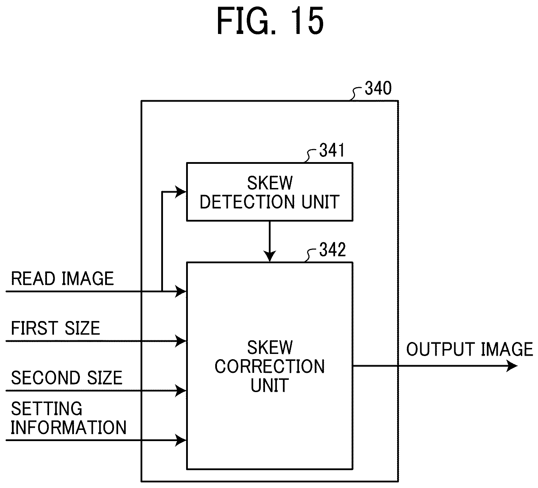

FIG. 15 is a block diagram illustrating an example of a functional configuration of the processing unit 340 according to the third embodiment. The difference from the first embodiment is that the second size and the setting information are input to the skew correction unit 342.

The skew correction unit 342 obtains a first size of a standard-sized document based on the second size and the orientation included in the setting information. For example, in a case where the second size is 210 mm, the skew correction unit 342 determines that the document is an A5-size vertical document when the orientation is vertical and obtains the first size as 148 mm, and determines that the document is an A4-size horizontal document when the orientation is horizontal and obtains the first size as 297 mm.

With this configuration, even when the number of detection sensors 133A is small and the detection resolution of the document width detection sensor 133 is low, the skew correction unit 342 can accurately obtain the first size with the minimum number of sensors and determine whether to perform skew correction.

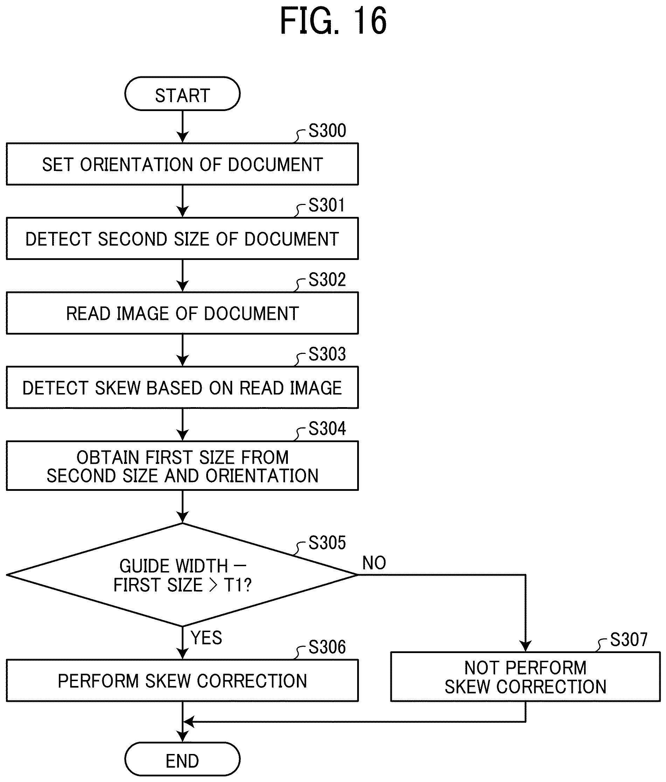

FIG. 16 is a flowchart presenting an example of a processing procedure according to the third embodiment. The difference from FIG. 9 is that FIG. 16 further includes steps S300, S301, and S304 and does not include step S100 in FIG. 9. Processes of steps S302, S303, and S305 to S307 in FIG. 16 are the same as those in steps S101, S102, and S103 to S105 in FIG. 9, and the description thereof will be omitted.

The setting unit 250 sets the orientation of a document (step S300), and the document length detection sensor 139 detects a second size of the document (step S301). The skew correction unit 342 obtains a first size from the second size and the orientation (step S304).

When the document does not have a standard size, the skew correction unit 342 may determine whether to perform skew correction using a first size detected by the document width detection sensor 133, as in the first embodiment.

As described above, with the present embodiment, the first size can be accurately obtained with the minimum number of sensors. Further, whether to perform skew correction is appropriately determined based on the obtained first size and the guide width, and the distortion of an image due to skew correction can be prevented.

The image reading device 10 further includes a second sensor (e.g., the document length detection sensor 139) to detect a length of the object in a parallel direction parallel to the conveyance direction; and a setting unit 250 configured to set an orientation of the object. The skew correction unit 342 is configured to: obtain (S304) the first width of the object based on the length of the object detected by the second sensor (e.g., the document length detection sensor 139) and the orientation set by the setting unit 250; and determine (S305) whether to correct the skew of the image based on the first width of the object.

### Fourth Embodiment

In a fourth embodiment, whether to perform skew correction is determined based on a first size obtained from a set size and the orientation of a document. In the following description of the fourth embodiment, the description of portions that are the same as those in the first embodiment is omitted, and the differences from the third embodiment are described.

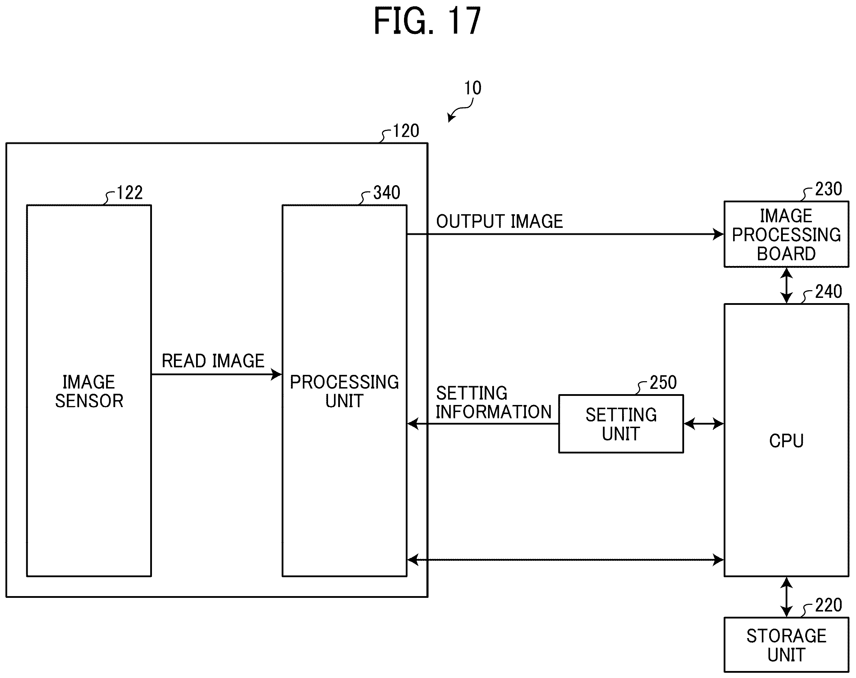

FIG. 17 is a block diagram illustrating an example of a configuration of an image reading device 10 according to the fourth embodiment. The difference from FIG. 3 is that the image reading device 10 further includes the setting unit 250 and does not include the document width detection sensor 133.

The setting unit 250 sets information such as the size and the orientation of the document and whether the document has a standard size in accordance with an operation performed on the operation panel 125 by the user, and inputs setting information including the set information to the processing unit 340. The information on the size of the document includes, for example, information indicating the long side and the short side of the document and information such as A4 or B5 indicating the size of a standard-sized document. Alternatively, the setting unit 250 may set the size and the orientation of the document based on information input from a personal computer (PC) connected from the outside of the image reading device 10.

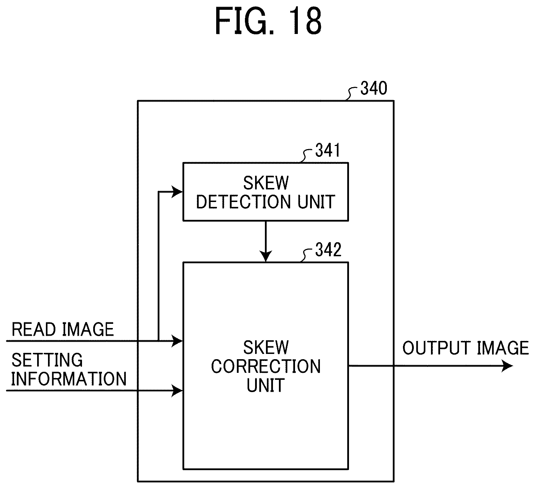

FIG. 18 is a block diagram illustrating an example of a functional configuration of the processing unit 340 according to the fourth embodiment. The difference from the first embodiment is that the setting information is further input to the skew correction unit 342 and the first size is not input to the skew correction unit 342.

The skew correction unit 342 obtains a first size from the size and the orientation of a document included in the setting information. With this configuration, the skew correction unit 342 can accurately obtain the first size without using a physical sensor and determine whether to perform skew correction.

Alternatively, the setting unit 250 may be configured to set a first size of a document in accordance with an operation performed on the operation panel 125 by the user, and input setting information including the first size to the processing unit 340. In this case, the skew correction unit 342 can obtain the information on the first size included in the setting information and determine whether to perform skew correction.

The image reading device 10 further includes a setting unit 250 configured to set the first width of the object. The skew correction unit 342 is configured to determine whether to correct the skew of the image based on the first width of the object set by the setting unit 250.

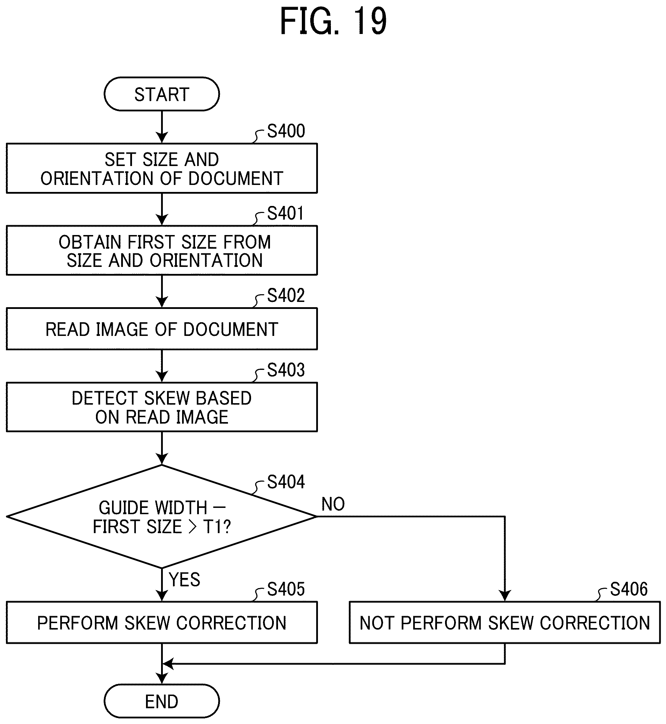

FIG. 19 is a flowchart presenting an example of a processing procedure according to the fourth embodiment. The difference from FIG. 9 is that FIG. 19 further includes steps S400 and S401 and does not include step S100 in FIG. 9. Processes of steps S402, S403, and S404 to S406 in FIG. 19 are the same as those of steps S101, S102, and S103 to S105 in FIG. 9, and the description thereof will be omitted.

The setting unit 250 sets the size and the orientation of a document (step S400). The skew correction unit 342 obtains a first size based on the size and the orientation of the document (step S401).

As described above, with the present embodiment, the first size can be accurately obtained with the minimum number of sensors. Further, whether to perform skew correction is appropriately determined based on the obtained first size and the guide width, and the distortion of an image due to skew correction can be prevented.

The image reading device 10 further includes a setting unit 250 configured to set (S400) a size and an orientation of the object. The skew correction unit 342 is configured to: obtain (S401) the first width of the object from the size and the orientation of the object set by the setting unit 250; and determine whether to correct the skew of the image based on the first width of the object obtained from the size and the orientation set by the setting unit 250.

### Fifth Embodiment

In a fifth embodiment, whether to perform skew correction is determined based on the conveyance speed of a document. Since the skew of the document occurring during conveyance tends to decrease as the conveyance speed decreases, skew correction can be performed when the conveyance speed exceeds a predetermined threshold even for a document having a small first size. In the following description of the fifth embodiment, the description of portions that are the same as those in the first embodiment is omitted, and the differences from the first embodiment are described.

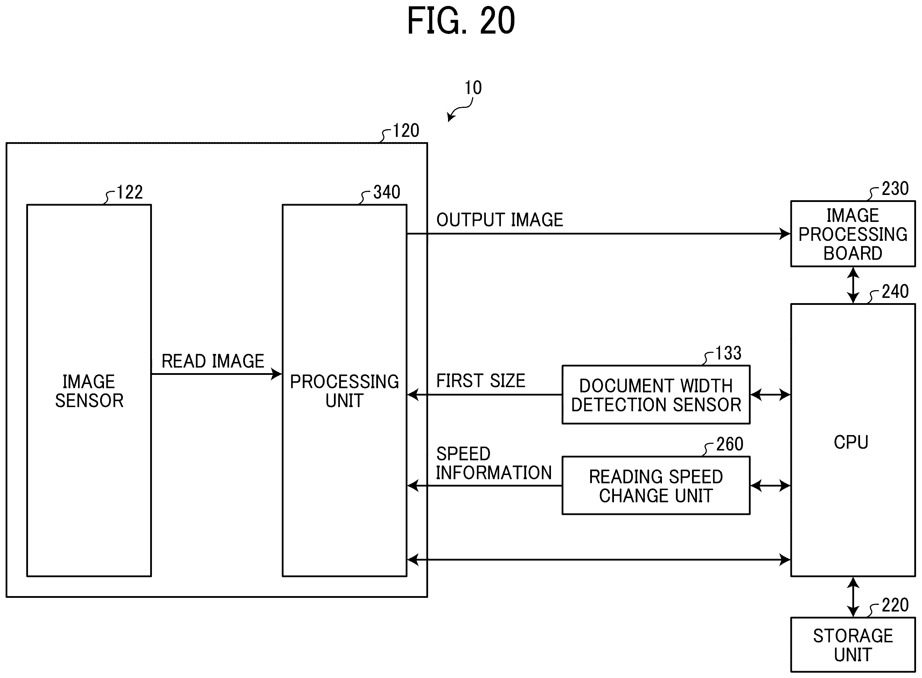

FIG. 20 is a block diagram illustrating an example of a configuration of an image reading device 10 according to the fifth embodiment. The difference from the first embodiment is that the image reading device 10 further includes a reading speed change unit 260.

The reading speed change unit 260 changes the speed at which the document is read in accordance with the drive period of the image sensor 122. Specifically, the reading speed change unit 260 changes the conveyance speed of a document conveyed by the ADF 102, and inputs information indicating the conveyance speed (speed information) to the processing unit 340.

The conveyance speed may include a speed at which a sheet is fed or ejected.

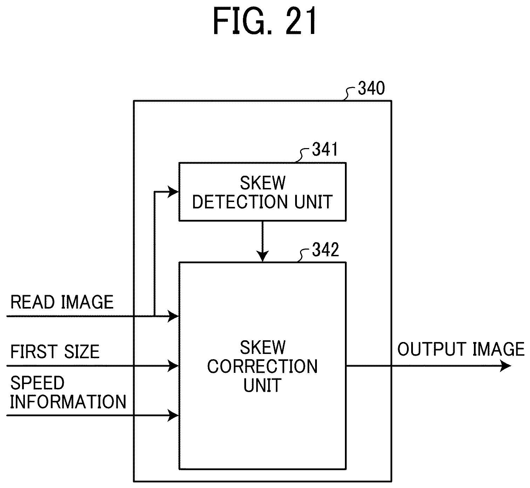

FIG. 21 is a block diagram illustrating an example of a functional configuration of a processing unit 340 according to the fifth embodiment. The difference from the first embodiment is that the speed information is further input to the skew correction unit 342.

When the difference obtained by subtracting the first size from the guide width is greater than a predetermined threshold value T1 and the conveyance speed indicated by the speed information is greater than a predetermined threshold value T2, the skew correction unit 342 performs skew correction. When the difference is not greater than the threshold value T1 or when the conveyance speed is not greater than the threshold value T2, the skew correction unit 342 does not perform skew correction.

The threshold values T1 and T2 are, for example, values set in advance in a production plant through an experiment. For example, one of these values may be set regardless of the size of a document, or different values may be set for different sizes of documents. The threshold value T1 may be dynamically changed in accordance with, for example, the use state of the image reading device 10. The threshold value T2 may be changed depending on, for example, the structure of the conveyors 137. The threshold value T1 is an example of a first threshold value, and the threshold value T2 is an example of a second threshold value.

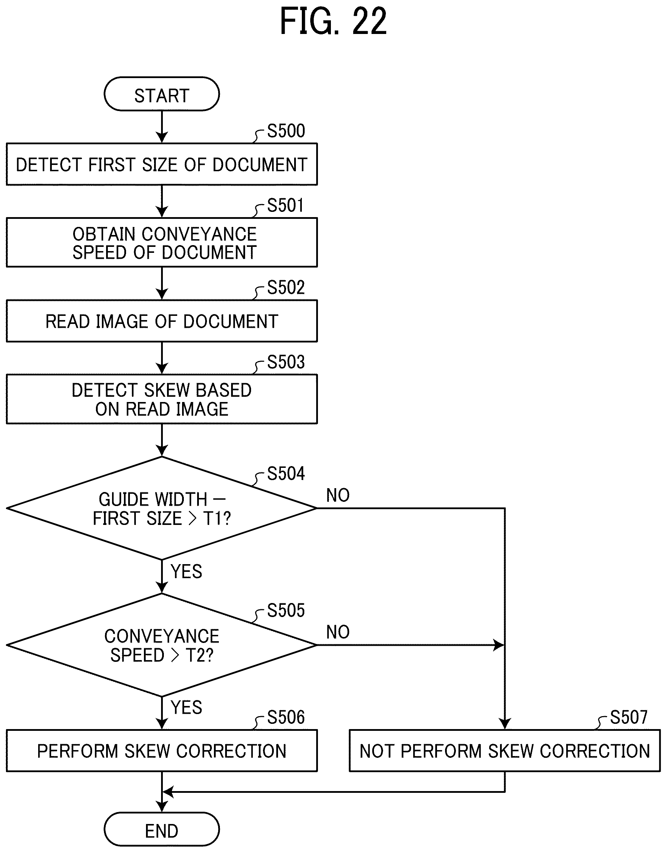

FIG. 22 is a flowchart presenting an example of a processing procedure according to the fifth embodiment. The difference from FIG. 9 is that FIG. 22 further includes steps S501 and S505. Processes of steps S500, S502 to S504, S506, and S507 in FIG. 22 are the same as those of steps S100, S101 to S103, S104, and S105 in FIG. 9, and the description thereof will be omitted.

The processing unit 340 acquires information on the conveyance speed of a document from the reading speed change unit 260 (step S501).

When the difference obtained by subtracting the first size from the guide width is greater than the threshold value T1 (step S504: Yes) and the conveyance speed is greater than the threshold value T2 (step S505: Yes), the skew correction unit 342 performs skew correction (step S506). In contrast, when the difference obtained by subtracting the first size from the guide width is not greater than the threshold value T1 (step S504: No) or when the conveyance speed is not greater than the threshold value T2 (step S505: No), the skew correction unit 342 does not perform skew correction (step S507).

The skew correction unit 342 is further configured to: receive a conveyance speed of the object conveyed in the conveyance direction; and determine whether to correct the skew of the image based on the conveyance speed.

The skew correction unit 342 is further configured to: determine whether the difference is greater than a first threshold value; determine (S505) whether the conveyance speed is greater than a second threshold value when the difference is greater than the first threshold (S504: YES); correct the skew of the image (S506): when the difference is greater than the first threshold value; and when the conveyance speed is greater than the second threshold value (S505: YES); not correct the skew of the image when the difference is not greater than the first threshold value (S504: NO); and not correct the skew of the image when the conveyance speed is not greater than the second threshold value (S505: NO).

As described above, with the present embodiment, whether to perform skew correction can be appropriately determined based on the first size, the guide width, and the conveyance speed of a document, and distortion of an image due to skew correction can be prevented.

### Sixth Embodiment

In a sixth embodiment, a first size of a document is detected based on a read image, and whether to perform skew correction is determined. In the following description of the sixth embodiment, the description of portions that are the same as those in the first embodiment is omitted, and the differences from the first embodiment are described.

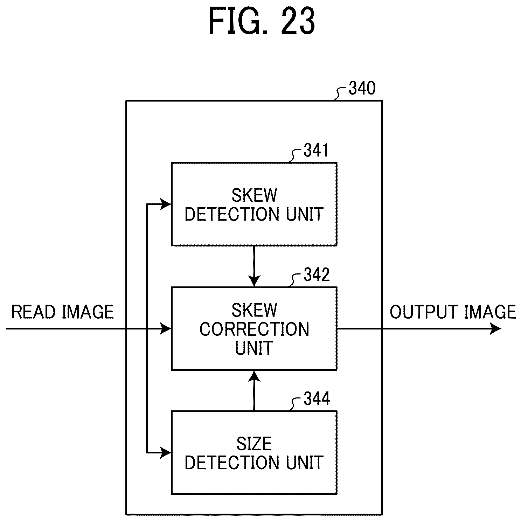

FIG. 23 is a block diagram illustrating an example of a functional configuration of a processing unit 340 according to the sixth embodiment. The difference from the first embodiment is that the processing unit 340 further includes a size detection unit 344 as a size detector.

The size detection unit 344 detects a first size of a document based on a read image and inputs the detected first size to the skew correction unit 342. For example, the size detection unit 344 detects pixels serving as ends of the document from a shadow of the document appearing in the background of the document included in the read image, and calculates a first size from the number of pixels corresponding to the distance between two ends of the document parallel to the document conveyance direction. With this configuration, the skew correction unit 342 can determine whether to perform skew correction using the first size acquired without using a physical sensor.

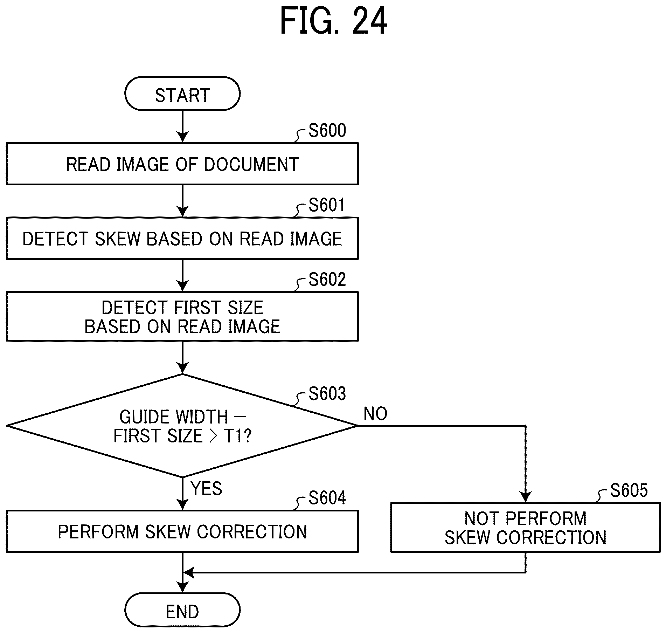

FIG. 24 is a flowchart presenting an example of a processing procedure according to the sixth embodiment. The difference from FIG. 9 is that FIG. 24 further includes step S602 and does not include step S100 in FIG. 9. Processes of steps S600, S601, and S603 to S605 in FIG. 24 are the same as those of steps S101, S102, and S103 to S105 in FIG. 9, and the description thereof will be omitted.

The size detector (i.e., the size detection unit 344) is configured to detect the first width based on the image of the object.

The size detection unit 344 detects a first size based on a read image (step S602), and inputs the detected first size to the skew correction unit 342.

As described above, with the present embodiment, whether to perform skew correction can be appropriately determined using the first size acquired without using a physical sensor, and distortion of an image due to skew correction can be prevented.

### Seventh Embodiment

In a seventh embodiment, the configuration of the image reading device 10 according to any one of the first to sixth embodiments is included in an image forming apparatus 400. In the following description of the seventh embodiment, the description of portions that are the same as those in the first to sixth embodiments is omitted, and the differences from the first to sixth embodiments are described.

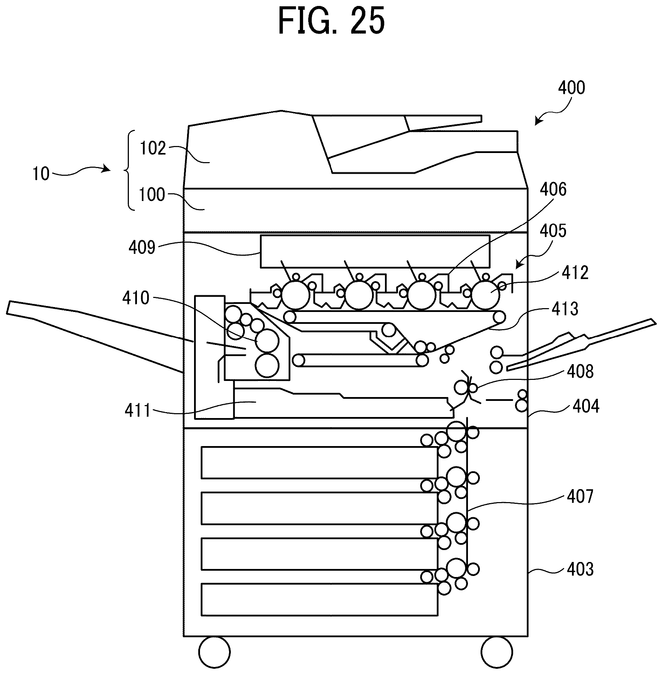

FIG. 25 is a cross-sectional view schematically illustrating an example of a configuration of a mechanical section of the image forming apparatus 400 according to the seventh embodiment. The image forming apparatus 400 (for example, a digital copying machine) includes an image reading device 10, a sheet feeder 403, and an image forming apparatus body 404 as an image former. The image reading device 10 includes a reading unit body 100 and an ADF 102, and has the same configuration as the configuration in any one of the first to sixth embodiments.

An image forming apparatus 400 includes the image reading device 10; and an image former (e.g., the image forming apparatus body 404) to form an image on a medium based on an image read by the image reading device 10.

The image forming apparatus body 404 includes a tandem image forming device 405, a registration roller pair 408 that conveys a recording sheet (medium) supplied from the sheet feeder 403 through a conveyance path 407 to the image forming device 405, an optical writing device 409, a fixing and conveyance device 410, and a duplex tray 411. The image forming apparatus body 404 is an example of an image forming unit (or an image former).

In the image forming device 405, four photoconductor drums 412 corresponding to four colors of yellow (Y), magenta (M), cyan (C), and black (K) are arranged in parallel, and image forming elements including a charger, a developing device 406, a transfer device, a cleaner, and a static eliminator are located around each photoconductor drum 412. Additionally, an intermediate transfer belt 413 is stretched over a driving roller and a driven roller such that the intermediate transfer belt 413 is sandwiched between the transfer devices and the photoconductor drums 412 to form nips therebetween.

Such an image forming apparatus 400, which has a tandem system as described above, performs optical writing of an image. More specifically, the image forming apparatus 400 optically writes the image of each color, that is, each of Y, M, C, and K, on a corresponding one of the photoconductor drums 412 to form a latent image. Each latent image is developed into a toner image with toner at a corresponding one of the developing devices 406. The toner images are then sequentially subjected to a primary transfer, in the order of Y, M, C, and K, onto the intermediate transfer belt 413, to form a full-color image in which the toner images are superimposed one above another. The full color image, in which four color images are superimposed by primary transfer, is transferred onto the recording sheet through a secondary transfer, and fixed on the recording sheet. Then, the recording sheet on which the image is fixed is ejected.

As described above, with the present embodiment, since the image reading device 10 described in any one of the first to sixth embodiments is included, the image forming apparatus 400 including the image reading device 10 that can appropriately determine whether to perform skew correction based on the first size and the guide width and prevent distortion of an image due to skew correction can be provided.

FIG. 25 illustrates the example of the image forming apparatus 400 having an electrophotographic image forming mechanism. In some examples, the image forming apparatus 400 may include another image forming mechanism such as an inkjet image forming mechanism.

While the processing unit 340 is included in the image reading device 10 in the above description, the processing unit 340 may be included in the image forming apparatus body 404 instead of the image reading device 10. Thus, the image forming apparatus 400 may include the image reading device 10 including the processing unit 340, the sheet feeder 403, and the image forming apparatus body 404 not including the processing unit 340; or the image forming apparatus 400 may include the image reading device 10 not including the processing unit 340, the sheet feeder 403, and the image forming apparatus body 404 including the processing unit 340.

### Eighth Embodiment

In an eighth embodiment, the image reading device 10 according to any one of the first to sixth embodiments is applied to an information acquisition system 500.

In recent years, in the field of distribution and logistics, information on an object is acquired from an image obtained by reading the object, and the information is utilized to increase the efficiency of the entire work. For example, when a delivery object is collected, information described in a shipping label is automatically digitized, and thus the efficiency of work can be increased. The object is, for example, a product or a box in which a product is packed. The information on the object is, for example, information such as a product name, a model number, a mark, and a delivery destination address printed on a product, a box, or a label attached to the product or the box.

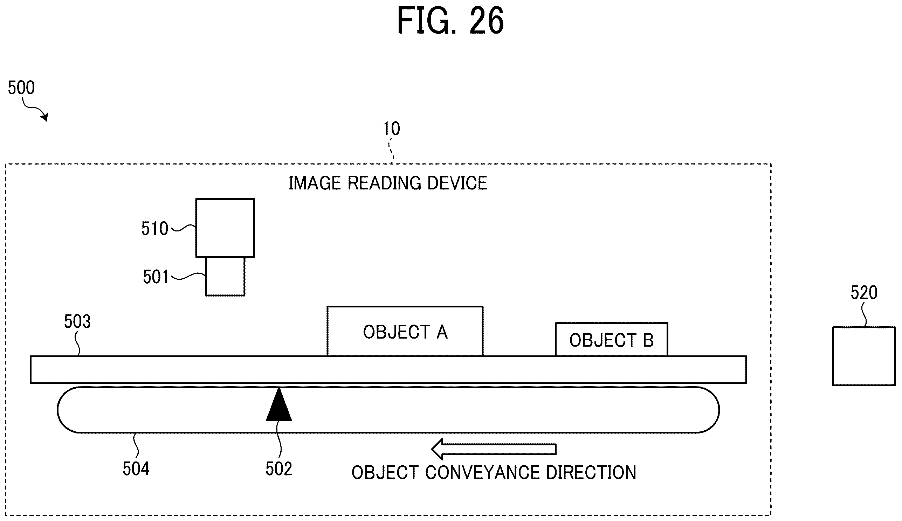

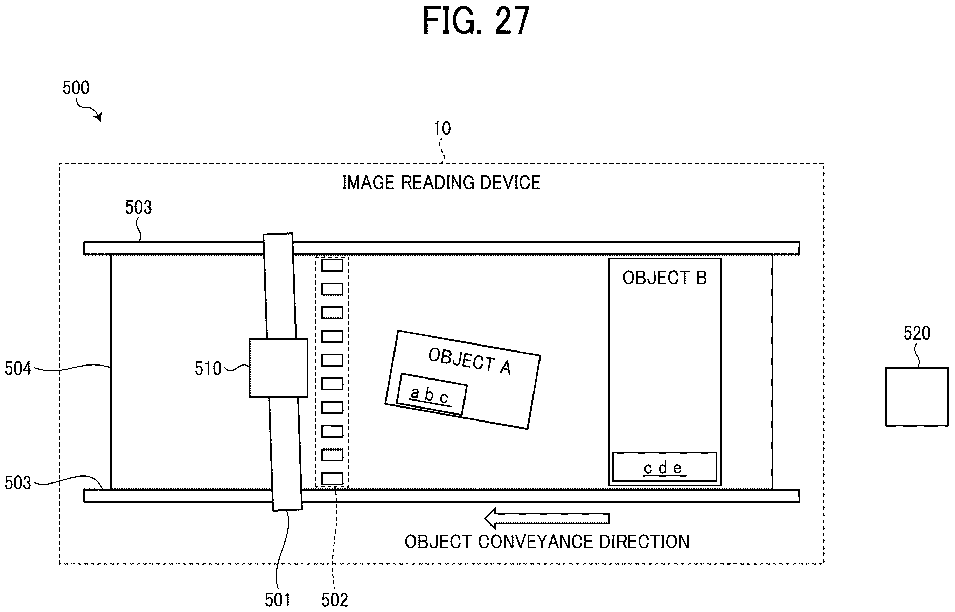

FIG. 26 is a diagram of the information acquisition system 500 according to the eighth embodiment as viewed from a side surface. FIG. 27 is a diagram of the information acquisition system 500 according to the eighth embodiment as viewed from directly above. As illustrated in FIGS. 26 and 27, the information acquisition system 500 includes a reading unit 501 as a reader, an object width detection sensor 502, an object guide 503, conveyance means 504 as a conveyor, an image processor 510, and an information acquirer 520. These components are communicably connected to each other in a wired or wireless manner.

The reading unit 501 reads an image of an object and generates a read image. The reading unit 501 is, for example, a line image sensor or a camera.

The object width detection sensor 502 detects a size (first size) of the object in a direction perpendicular to the conveyance direction of the object (object conveyance direction). The object width detection sensor 502 is, for example, a sensor array including multiple detection sensors. The object width detection sensor 502 is an example of a first sensor.

The object guide 503 guides conveyance of the object. The object guide 503 is, for example, a pair of guide walls located on both sides of the conveyance means 504.

The conveyance means 504 conveys the object in the object conveyance direction. The conveyance means 504 is, for example, a belt conveyor.

The image processor 510 includes the skew detection unit 341 and the skew correction unit 342 described in any one of the first to sixth embodiments. The image processor 510 detects a skew of the read image and generates an output image while switching between a case where skew correction is performed and a case where skew correction is not performed based on the first size.

The image processor 510 is included in the image reading device 10 together with the reading unit 501, the object width detection sensor 502, the object guide 503, and the conveyance means 504.

The information acquirer 520 converts information on the object included in the output image generated by the image processor 510 into data using an optical character recognition/reader (OCR). In the example of FIG. 27, the information acquirer 520 converts print information "abc" of an object A and print information "cde" of an object B into data.

An information acquisition system 500 includes the image reading device 10 and an information acquirer 520 to acquire information on the object from the image.

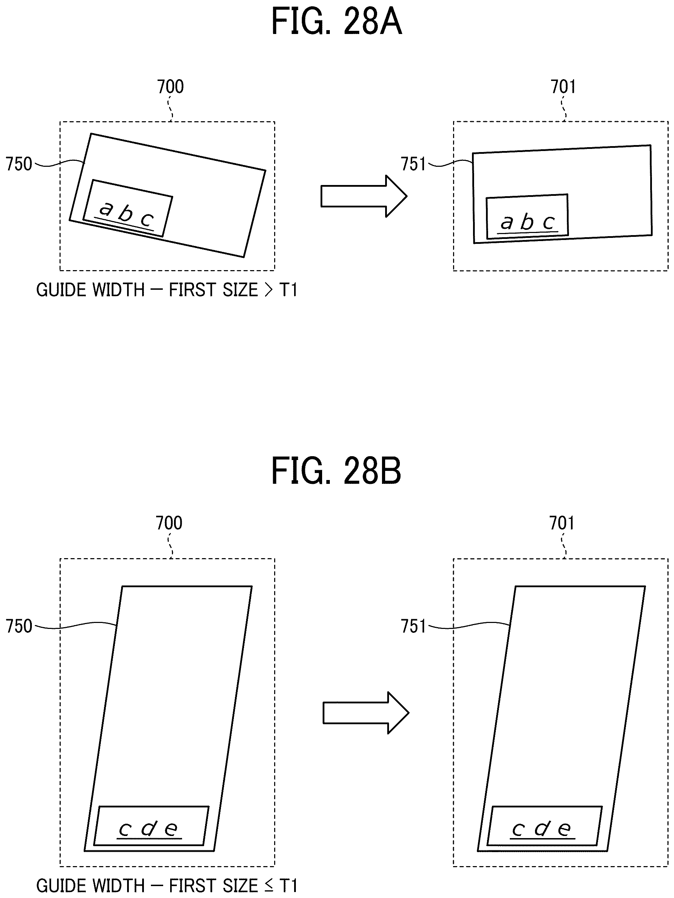

FIGS. 28A and 28B are diagrams illustrating examples of a read image and an output image of an object. When a line image sensor of the reading unit 501 is not perpendicular to the object conveyance direction as illustrated in FIG. 27, the image of an object in a read image 700 is distorted as illustrated in FIGS. 28A and 28B.

FIG. 28A illustrates a read image 700 of the object A in FIG. 27 and an output image 701 thereof. In this example, the difference obtained by subtracting the first size from the width (guide width) of the object guide 503 is greater than a threshold value T1, and the object A is conveyed in a skewed state. In this case, the image of the object A in the read image 700 is distorted due to the skew of the line image sensor, and the arrangement of the information "abc" as a character string is skewed in the image.

FIG. 28B illustrates a read image 700 of the object B in FIG. 27 and an output image 701 thereof. In this example, the difference obtained by subtracting the first size from the guide width is the threshold value T1 or smaller, and the object B is conveyed without being skewed. In this case, while the image of the object B in the read image 700 is distorted due to the skew of the line image sensor, the arrangement of the character string of the information "cde" is not skewed.

In the case of FIG. 28A, since the difference obtained by subtracting the first size from the guide width is greater than the threshold value T1, the skew correction unit 342 generates an output image 701 on which skew correction has been performed. As a result, while the distortion of the characters of the information "abc" is not eliminated, the skew of the arrangement of the characters as the character string becomes smaller than the skew before the correction. Thus, the character recognition rate in the information acquirer 520 is improved by using the output image 701.

In the case of FIG. 28B, since the difference obtained by subtracting the first size from the guide width is the threshold value T1 or smaller, the skew correction unit 342 does not perform skew correction. Thus, the output image 701 is the same image as the read image 700. When skew correction is performed according to a comparative example, the arrangement of the information "cde" as the character string is skewed, and the character recognition rate decreases. According to the present embodiment, by determining not to perform skew correction and using the output image 701 that is the same as the read image 700, a decrease in the character recognition rate can be prevented.

As described above, with the present embodiment, the information acquisition system 500 including the image reading device 10 described in any one of the first to sixth embodiments can be provided. With this configuration, the information on the object can be more accurately acquired using the output image 701, in which the distortion of the image due to skew correction is prevented.

While the image processor 510 is included in the image reading device 10 in the above description, the image processor 510 may be included in an apparatus (external apparatus) outside the image reading device 10. In this case, the external device is communicably connected to the image reading device 10 and the information acquirer 520. Thus, the information acquisition system 500 may include the image reading device 10 including the image processor 510, and the information acquirer 520; or the information acquisition system 500 may include the image reading device 10 not including the image processor 510, an external device including the image processor 510, and the information acquirer 520.

The program to be executed by the image processor of any one of the above-described embodiments is provided as a file in an installable or executable format recorded on a computer-readable recording medium such as a compact disc-read-only memory (CD-ROM), a flexible disk (FD), a CD-recordable (CD-R), or a digital versatile disk (DVD).

Alternatively, the program to be executed by the image processor according to any one of the above-described embodiments may be stored on a computer connected to a network such as the Internet and downloaded via the network. The program to be executed by the image processor according to any one of the above-described embodiments may be provided or distributed through a network such as the Internet.

Alternatively, the program according to any one of the above-described embodiments may be integrated in advance, for example, into a ROM inside the device for distribution.

The program to be executed by the image processor according to any one of the above-described embodiments has a module configuration including the components (for example, the skew detection unit 341 and the skew correction unit 342) described above. As actual hardware, a CPU (or processor) reads the program from the above-described recording medium and executes the program such that the above-described components are loaded onto a main storage device and implemented on the main storage device.

Each of the functions of any one of the above-described embodiments can be implemented by one or more processing circuits or circuitry. Processing circuitry includes a programmed processor, as a processor includes circuitry. A processing circuit also includes devices such as an application-specific integrated circuit (ASIC), a digital signal processor (DSP), a field-programmable gate array (FPGA), and typical circuit components arranged to perform the recited functions.

Although some embodiments of the present disclosure have been described above, the above-described embodiments are presented as examples and are not intended to limit the scope of the present invention. Numerous additional modifications are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims. In addition, the embodiments and modifications or variations thereof are included in the scope and the gist of the invention, and are included in the invention described in the claims and the equivalent scopes thereof. Further, elements according to varying embodiments or modifications may be combined as appropriate.

Aspects of the present disclosure are, for example, as follows.

According to Aspect 1, an image processor includes a skew detection unit that detects a skew of a conveyed object based on an image obtained by reading the object; and a skew correction unit that corrects the image based on the skew of the object. The skew correction unit determines whether to correct the image based on a width of the object in a direction perpendicular to a conveyance direction of the object and a width of an object guide that guides conveyance of the object.

According to Aspect 2, in the image processor of Aspect 1, the skew correction unit corrects the image when a difference obtained by subtracting the width of the object from the width of the object guide is greater than a first threshold value, and does not correct the image when the difference is not greater than the first threshold value.

According to Aspect 3, in the image processor of Aspect 1, the skew correction unit corrects the image when a difference obtained by subtracting the width of the object from the width of the object guide is greater than a first threshold value or when a length of the object in a direction parallel to the conveyance direction is smaller than the width of the object, and does not correct the image when the difference is not greater than the first threshold value and the length of the object is not smaller than the width of the object.

According to Aspect 4, in the image processor of Aspect 1, the skew correction unit determines whether to correct the image further based on a conveyance speed of the object.

According to Aspect 5, in the image processor of Aspect 4, the skew correction unit corrects the image when a difference obtained by subtracting the width of the object from the width of the object guide is greater than a first threshold value and the conveyance speed is greater than a second threshold value, and does not correct the image when the difference is not greater than the first threshold value or when the conveyance speed is not greater than the second threshold value.

According to Aspect 6, the image processor of any one of Aspect 1 to Aspect 5 further includes a size detection unit that detects the width of the object based on the image.

According to Aspect 7, an image reading device includes conveyance means that conveys an object; an object guide that guides conveyance of the object; a reading unit that reads the object; and the image processor of any one of Aspect 1 to Aspect 6.

According to Aspect 8, the image reading device of Aspect 7 further includes an object tray on which the object is placed; and a first sensor that is located in a vicinity of the object tray and detects a width of the object.

According to Aspect 9, the image reading device of Aspect 7 further includes a first sensor that detects a width of the object between a position at which the conveyance means starts the conveyance of the object and a reading position of the reading unit.

According to Aspect 10, the image reading device of any one of Aspect 7 to Aspect 9 further includes a second sensor that detects a length of the object; and a setting unit that sets an orientation of the object. The skew correction unit determines whether to correct the image based on a width of the object obtained from the length of the object detected by the second sensor and the orientation set by the setting unit.

According to Aspect 11, the image reading device of Aspect 7 further includes a setting unit that sets a size and an orientation of the object. The skew correction unit determines whether to correct the image based on a width of the object obtained from the size and the orientation set by the setting unit.

According to Aspect 12, the image reading device of Aspect 7 further includes a setting unit that sets a width of the object. The skew correction unit determines whether to correct the image based on the width of the object set by the setting unit.

According to Aspect 13, an image forming apparatus includes the image reading device of Aspect 7; and an image forming unit that forms an image on a medium based on an image read by the image reading device.

According to Aspect 14, an information acquisition system includes the image reading device of Aspect 7; and information acquisition means that acquires information on the object from the image.

According to Aspect 15, an image processing method executed by an image processor includes detecting a skew of a conveyed object based on an image obtained by reading the object; and correcting the skew to correct the image based on the skew of the object. The correcting determines whether to correct the image based on a width of the object in a direction perpendicular to a conveyance direction of the object and a width of an object guide that guides conveyance of the object.

According to Aspect 16, a program causes a computer to function as means. The means includes skew detection means that detects a skew of a conveyed object based on an image obtained by reading the object; and skew correction means that corrects the skew to correct the image based on the skew of the object. The skew correction means determines whether to correct the image based on a width of the object in a direction perpendicular to a conveyance direction of the object and a width of an object guide that guides conveyance of the object.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An image processor (340) comprising:
a skew detection unit (341) configured to:
receive an image of an object:
having:
a first width in a transverse direction; and
a length in a conveyance direction orthogonal to the transverse direction:
conveyed in the conveyance direction; and
guided by a guide having a second width in the transverse direction; and
detect (S102) a skew of the object based on the image of the object; and
a skew correction unit (342) configured to:
obtain a difference between the first width of the object and the second width of the guide in the transverse direction; and
determine (S103) whether to correct the skew of the image based on the difference obtained.

2. The image processor (340) according to claim 1,
wherein the skew correction unit (342) is configured to:
determine whether the difference is greater than a first threshold value;
correct (S104) the skew of the image when the difference is greater than the first threshold value; and
not correct the skew of the image when the difference is not greater than the first threshold value (T1).

3. The image processor (340) according to claim 1,
wherein the skew correction unit (342) is further configured to:
determine (S113) whether the difference is greater than a first threshold value;
correct the skew of the image when the difference is greater than the first threshold value (S113: YES);
determine (S114) whether the first width is greater than the length of the object when the difference is not greater than the first threshold value (S113: NO);
correct (S115) the skew of the image when the first width is greater than the length of the object (S114: YES); and
not correct (S116) the skew of the image when the first width is not greater than the length of the object (S114: NO).

4. The image processor (340) according to claim 1,
wherein the skew correction unit (342) is further configured to:
receive a conveyance speed of the object conveyed in the conveyance direction; and
determine whether to correct the skew of the image based on the conveyance speed.

5. The image processor (340) according to claim 4,
wherein the skew correction unit (342) is further configured to:
determine whether the difference is greater than a first threshold value;
determine (S505) whether the conveyance speed is greater than a second threshold value when the difference is greater than the first threshold (S504: YES);
correct the skew of the image (S506):
when the difference is greater than the first threshold value; and
when the conveyance speed is greater than the second threshold value (S505: YES);
not correct the skew of the image when the difference is not greater than the first threshold value (S504: NO); and
not correct the skew of the image when the conveyance speed is not greater than the second threshold value (S505: NO).

6. An image reading device (10) comprising:
the image processor (510) according to any one of claims 1 to 6;
a conveyor (137) to convey the object in the conveyance direction;
the guide (503) to guide the object; and
a reader (501) to read the object and generate the image,
wherein the image processor (510) outputs an output image based on:
the image read by the reader; and
the first width of the object.

7. The image reading device (10) according to claim 6, further comprising:
an object tray (130) on which the object is placed; and
a first sensor (133) located at the object tray (130), to detect the first width of the object.

8. The image reading device (10) according to claim 6, further comprising a first sensor (133) between a first position at which the conveyor (137) starts conveying the object and a second position at which the reader (100) reads the object, the first sensor (133) to detect the first width of the object.

9. The image reading device (10) according to any one of claims 6 to 8, further comprising:
a second sensor (139) to detect a length of the object in a parallel direction parallel to the conveyance direction; and
a setting unit (250) configured to set an orientation of the object,
wherein the skew correction unit (342) is configured to:
obtain (S304) the first width of the object based on the length of the object detected by the second sensor (139) and the orientation set by the setting unit (250); and
determine (S305) whether to correct the skew of the image based on the first width of the object.

10. The image reading device (10) according to claim 6, further comprising a setting unit (250) configured to set (S400) a size and an orientation of the object,
wherein the skew correction unit (342) is configured to:
obtain (S401) the first width of the object from the size and the orientation of the object set by the setting unit (250); and
determine whether to correct the skew of the image based on the first width of the object obtained from the size and the orientation set by the setting unit (250).

11. The image reading device (10) according to claim 6, further comprising a setting unit (250) configured to set the first width of the object,
wherein the skew correction unit (342) is configured to determine whether to correct the skew of the image based on the first width of the object set by the setting unit (250).

12. An image forming apparatus (400) comprising:
the image reading device (10) according to any one of claims 6 to 11; and
an image former (404) configured to form an image on a medium based on an image read by the image reading device (10).

13. An information acquisition system (500) comprising:
the image reading device (10) according to any one of claims 6 to 11; and
an information acquirer (520) configured to acquire information on the object from the image.

14. An image processing method executed by an image processor (340), the method comprising:
receiving an image of an object:
having:
a first width in a transverse direction; and
a length in a conveyance direction orthogonal to the transverse direction:
conveyed in the conveyance direction; and
guided by a guide having a second width in the transverse direction;
detecting (S102) a skew of the object based on the image of the object;
obtaining a difference between the first width of the object and the second width of the guide in the transverse direction; and
determining (S103) whether to correct the skew of the image based on the difference obtained.

15. A carrier medium carrying computer-readable code for controlling a computer system to carry out a presuming method, the method comprising:
receiving an image of an object:
having:
a first width in a transverse direction; and
a length in a conveyance direction orthogonal to the transverse direction:
conveyed in the conveyance direction; and
guided by a guide having a second width in the transverse direction;
detecting (S102) a skew of the object based on the image of the object;
obtaining a difference between the first width of the object and the second width of the guide in the transverse direction; and
determining (S103) whether to correct the skew of the image based on the difference obtained.
